Europäisches Patentamt

European Patent Office

Office européen des brevets

(11) Numéro de publication : **0 465 409 A1**

# (12) DEMANDE DE BREVET EUROPEEN

(21) Numéro de dépôt : **91810455.5**

(51) Int. Cl.⁵ : **B23B 31/11, B23B 31/00**

(22) Date de dépôt : **14.06.91**

(30) Priorité : **18.06.90 CH 2016/90**

(43) Date de publication de la demande :
**08.01.92 Bulletin 92/02**

(84) Etats contractants désignés :
**DE FR GB IT SE**

(71) Demandeur : **PRECIFAR S.A.**
**79, rue de la Serre**
**CH-2300 La Chaux-De-Fonds (CH)**

(72) Inventeur : **Lechot, André**
**Sous l'Eau Belle, 24**
**CH-2534 Orvin (CH)**

(74) Mandataire : **Meylan, Robert Maurice et al**
**c/o BUGNION S.A. 10, route de Florissant**
**Case Postale 375**
**CH-1211 Genève 12 - Champel (CH)**

(54) **Dispositif d'attache rapide d'un outil destiné à être entraîné en rotation.**

(57)     Le dispositif d'attache rapide comprend seulement deux parties séparables lors du montage et du démontage de la mèche, la première partie (1) étant solidaire de l'outil et la deuxième partie (2) étant solidaire d'un corps d'entraînement moteur. Le verrouillage axial et le verrouillage en rotation sont assurés respectivement par vissage et l'engagement de deux extrémités profilées (12, 23) de profils conjugués.

EP 0 465 409 A1

Jouve, 18, rue Saint-Denis, 75001 PARIS

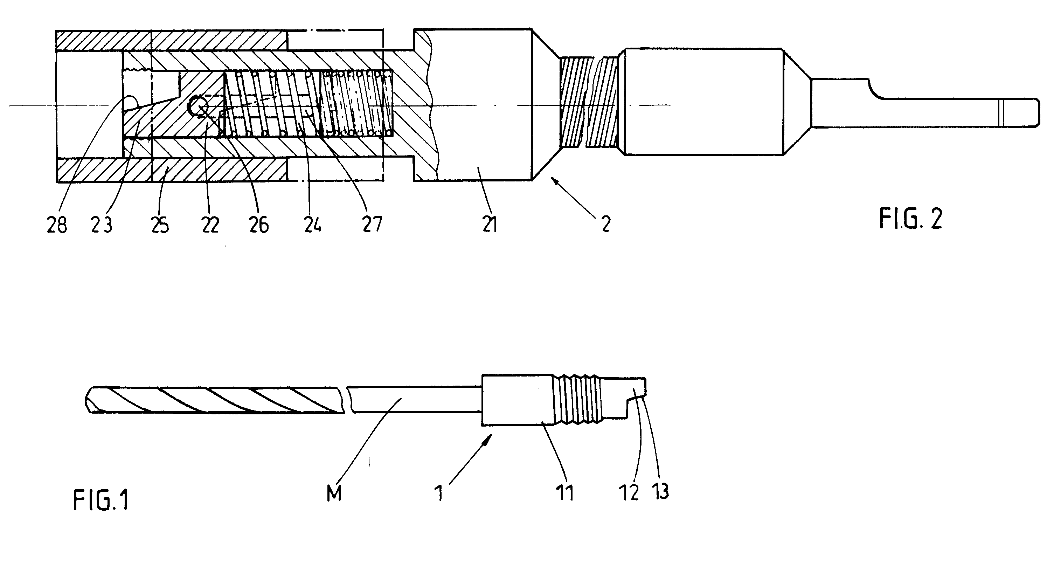

28  23  25  22  26  24  27            21            2            FIG. 2

FIG.1            M            1            11      12  13

La présente invention concerne un dispositif d'attache rapide d'un outil destiné à être entraîné en rotation, comprenant des moyens pour ajuster sans jeu et pour rendre solidaires en rotation et en translation l'outil avec un corps d'entraînement moteur.

Le dispositif d'attache selon l'invention est avant tout destiné à l'attache d'une mèche chirurgicale, mais il n'est pas limité à ce type d'outil.

Lors d'interventions chirurgicales, diverses mèches doivent être très rapidement montées et retirées du dispositif d'entraînement moteur.

Dans la plupart des dispositifs connus, la tige cylindrique de la mèche est fixée dans un mandrin à trois mors, serrés à l'aide d'un clé qui constitue une troisième pièce à manipuler. Un serrage efficace dépend de la force physique exercée.

On connaît un autre dispositif d'attache rapide pour mèche chirurgicale dans lequel la mèche est fixée solidairement sur une embase munie de deux ergots radiaux sur la tige d'entraînement est monté un dispositif solidaire de ladite tige; ce dispositif comprend une pièce cylindrique creuse dans laquelle l'embase de la mèche vient coulisser. Les ergots de l'embase viennent s'insérer dans deux fentes pratiquées dans cette pièce pour empêcher la rotation de l'embase à l'intérieur de la pièce. La mèche est maintenue en place à l'aide d'une bague filetée intérieurement, crantée, formant couvercle. Ce couvercle est percé de telle manière à laisser passer la mèche; la bague est vissée sur l'extérieur, lui-même fileté de la pièce cylindrique. Pour empêcher un dévissage intempestif de la bague, une deuxième bague, également crantée, est montée élastiquement sur la pièce cylindrique, de façon à pouvoir coulisser en translation tout en étant bloquée en rotation, à l'aide d'une nervure coulissant dans une fente de la pièce cylindrique.

Tout en assurant globalement sa fonction d'attache rapide, ce dispositif de l'art antérieur comporte des inconvénients et notamment :

– De laisser subsister un certain jeu (contact légèrement branlant) dans le positionnement de la mèche, en position bloquée, fonction du crantage et de la profondeur des rainures.

– L'obligation de manipuler deux pièces, la bague crantée et la mèche, pour séparer cette dernière de la tige d'entraînement motrice, ce qui peut être gênant pour un chirurgien en train d'opérer avec le risque de laisser choir ou d'égarer la bague de blocage.

Le but de la présente invention est un dispositif d'attache rapide pour mèche chirurgicale quine présente pas ces inconvénients de l'art antérieur.

Ce but est atteint à l'aide d'un dispositif comprenant seulement deux parties séparables lors du montage et du démontage de la mèche, la première partie étant solidaire de la mèche et la deuxième partie étant solidaire du corps d'entraînement moteur, que lesdites parties portent des moyens pour les ajuster et les rendre solidaires en translation à l'aide d'une rotation de la première partie par rapport à la deuxième partie, que ladite rotation peut être bloquée à l'aide de moyens de blocage situés respectivement sur chacune des deux parties, et que lesdits moyens de blocage situés sur la deuxième partie peuvent être actionnés par la main de l'opérateur.

De préférence, les deux parties sont ajustées et rendues solidaires en les vissant l'une dans l'autre à l'aide de parties filetées conjuguées.

Le mouvement de vissage/dévissage est bloqué par la venue en prise, avec l'extrémité de l'embase, d'une pièce coulissant à l'intérieur de la deuxième partie et s'adaptant au profil de cette extrémité. Cette pièce coulissante est reliée solidairement, avec ou sans pièces intermédiaires, à une pièce située à l'extérieur de la deuxième partie, que l'opérateur actionne pour commander le coulissement. Au moins l'une de ces pièces (pièce coulissante, pièces intermédiaires, pièce extérieure) est bloquée en rotation par rapport à l'axe de la deuxième partie, interdisant ainsi la rotation de l'ensemble. Cet ensemble peut ne consister qu'en une bague extérieure, traversée par une tige ou goupille transversale glissant dans deux fentes longitudinales de la deuxième partie. La tige peut être maintenue dans la position où elle vient en prise avec l'extrémité de l'embase par un ressort.

Mèche et embase peuvent être usinées d'une pièce. Mais une embase cylindrique creuse peut également être fabriquée séparément et recevoir les mèches à tiges cylindriques couramment utilisées, par exemple de diamètre = 2,35 mm.

Le dessin annexé représente, à titre d'exemple, un mode d'exécution de l'invention.

La figure 1 montre une mèche chirurgicale insérée dans la première partie de l'attache ou partie mâle.

La figure 2 montre la deuxième partie, ou partie femelle, solidaire d'une tige d'entraînement motrice souple munie, (partie droite de la figure 1) d'une pièce de jonction avec un moteur. La tige et la pièce de jonction ne font pas partie de l'invention.

La première partie 1 est constituée d'une embase cylindrique 11, creuse, dans laquelle la mèche M est insérée, cette embase étant partiellement filetée extérieurement et prolongée par une première extrémité approximativement semi-cylindrique 12 la face 13 étant légèrement oblique relativement à l'axe de l'embase. La deuxième partie 2 comprend une première pièce cylindrique creuse 21, filetée intérieurement, de telle sorte que ladite embase peut y être vissée et une deuxième pièce cylindrique 22 pouvant coulisser à l'intérieur de ladite première pièce, prolongée en direction de ladite embase par une deuxième extrémité approximativement semi-cylindrique 23, la face 28 étant oblique relativement à l'axe de manière à former un profil homologue du profil de l'extrémité de l'embase et capable de venir en prise, sans jeu, avec ladite première extrémité semi-cylindrique 12. Un ressort 24 placé dans ladite première pièce cylindrique, pousse ladite deuxième pièce cylindrique vers l'extérieur de ladite première pièce cylindrique; une bague 25 coulisse sur l'extérieur de ladite première pièce cylindrique et une goupille 26, est chassée à travers des orifices transversaux de ladite bague et de ladite deuxième pièce cylindrique et glisse dans deux fentes longitudinales 27, 27' pratiquées dans ladite première pièce cylindrique.

La rotation de la deuxième pièce cylindrique à l'intérieur de la première pièce cylindrique est bloquée par la goupille 26 glissant dans les fentes 27, 27'. Le mouvement de translation de l'ensemble formé par la bague, la deuxième pièce cylindrique et la goupille est limité par la longueur des fentes longitudinales 27, 27'.

Lors du montage, une main de l'opérateur tient la partie femelle 2. A l'aide, par exemple du pouce et de l'index, la bague 25 est tirée en arrière. L'autre main saisit la mèche et visse la partie mâle de l'attache dans la partie femelle. Vers la fin de l'opération de vissage, la bague est relachée. Lorsque les extrémités 12 et 23 sont en regard de façon à pouvoir venir en prise, le ressort 24 pousse la bague et la pièce 22 en avant, de sorte que l'ensemble est bloqué.

Les filetages n'assurent pas une fonction de serrage mais une fonction de verrouillage axial, en synergie avec l'ajustage précis des pièces 11 et 22 entre elles, grâce à leurs extrémités 12 et 23, et avec le cylindre intérieur de la pièce 21.

Aucun auto-serrage ou auto-desserrage des filetages n'étant susceptible de se produire en cours de fonctionnement, le sens de ces filetages peut être identique ou inverse du sens de rotation de l'outil en fonctionnement.

Un positionnement parfait de la mèche ne nécessite donc pas un vissage à fond, "à force"; il n'y a donc pas de risque de grippage, et il suffit, pour le démontage, de tirer la bague en arrière (de la même main qui tient la partie femelle) et de dévisser sans effort.

Le dispositif pourrait être équipé d'un dispositif de sécurité additionnel constitué, par exemple, d'un écrou monté sur la partie 21, entre sa base et la bague coulissante 25, permettant d'empêcher le recul de la bague coulissante.

Le dispositif d'attache selon l'invention trouve aussi une utilisation avantageuse dans le domaine de la mécanique en général, par exemple pour la fixation de tarauds dans une tourne-à-gauche ou pour la fixation de forets sur les perceuses à main.

**Revendications**

1. Dispositif d'attache rapide d'un outil destiné à être entraîné en rotation, comprenant des moyens pour ajuster sans jeu et pour rendre solidaires en rotation et en translation ledit outil et un corps d'entraînement moteur, caractérisé en ce qu'il comprend seulement deux parties séparables lors du montage et du démontage de l'outil, la première partie (1) étant solidaire de l'outil et la deuxième partie (2) étant solidaire du corps d'entraînement moteur, que lesdites parties portent des moyens pour les ajuster et les rendre solidaires en translation à l'aide d'une rotation de la première partie par rapport à la deuxième partie, que ladite rotation peut être bloquée à l'aide de moyens de blocage situés respectivement sur chacune des deux parties, et que lesdits moyens de blocage situés sur la deuxième partie peuvent être actionnés par la main de l'opérateur.

2. Dispositif selon la revendication 1, caractérisé en ce que la première partie (1) est constituée d'une embase (11) cylindrique solidaire de l'outil, filetée extérieurement et prolongée par une première extrémité profilée (12), que la deuxième partie (2) comprend une première pièce cylindrique creuse (21) filetée intérieurement de telle sorte que ladite embase peut y être vissée et au moins une deuxième pièce pouvant coulisser dans ladite première pièce et capable de venir en prise avec ladite première extrémité profilée et que la deuxième partie comprend des moyens pour actionner en translation et pour bloquer en rotation ladite deuxième pièce dans ladite première pièce cylindrique.

3. Dispositif selon la revendication 2, caractérisé en ce que ladite deuxième pièce est une goupille et en ce que les moyens pour actionner en translation et bloquer en rotation cette goupille sont constitués d'un ressort (24) placé dans ladite première pièce cylindrique, poussant ladite goupille vers l'extérieur de ladite première pièce cylindrique, d'une bague (25) coulissant sur l'extérieur de ladite première pièce cylindrique, et de deux fentes longitudinales (27, 27') pratiquées dans ladite première pièce cylindrique, ladite goupille étant chassée à travers des orifices transversaux de ladite bague et glissant lors de ladite translation dans les deux fentes (27, 27')

4. Dispositif selon la revendication 2, caractérisé en que la première partie (1) est constituée d'une embase (11) cylindrique, filetée extérieurement et prolongée par une première extrémité profilée approximativement semi-cylindrique (12), que la deuxième partie (2) comprend une première pièce cylindrique creuse (21) filetée intérieurement de telle sorte que ladite embase peut y être vissée et une deuxième pièce cylindrique (22) pouvant coulisser à l'intérieur de ladite première pièce, prolongée en direction de ladite embase par une deuxième extrémité (23) de profil conjugué à la partie profilée (12) de la première partie et capable de venir en prise avec ladite première extrémité semi-cylindrique (12), et que les moyens pour actionner en trans1ation et pour bloquer en rotation sont constitués d'un ressort (24) placé dans ladite première pièce cylindrique, poussant ladite deuxième pièce cylindrique vers l'extérieur de ladite première pièce cylindrique, d'une bague (25) coulissant sur l'extérieur de ladite première pièce cylindrique et d'une goupille (26), ladite goupille étant chassée à travers des orifices transversaux de ladite bague et de ladite deuxième pièce cylindrique et glissant lors de ladite translation dans deux fentes (27, 27') longitudinales pratiquées dans ladite première pièce cylindrique.

5. Dispositif selon l'une des revendications 2 à 4, caractérisé par le fait qu'il comporte un dispositif de sécurité additionnel empêchant ladite translation.

6. Dispositif selon l'une des revendications 3 ou 4 et la revendication 5, caractérisé par le fait que ledit dispositif de sécurité additionnel consiste en un écrou de blocage situé sur le corps d'entraînement, entre la bague coulissante et une portée du corps d'entraînement

7. Dispositif selon l'une des revendications précédentes, caractérisé en ce que ladite embase est fabriquée d'une pièce avec l'outil.

8. Dispositif selon l'une des revendications 1 à 4, caractérisé en ce que ladite embase est une embase cylindrique creuse dans laquelle la tige de l'outil est insérée.

9. Dispositif selon l'une des revendications 1 à 7, caractérisé en ce que les rainures hélicoïdales de l'outil ont le même sens que le filetage de ladite embase.

10. Dispostif selon l'une des revendications 1 à 7, caractérisé en ce que les rainures hélicoïdales de l'outil et le filetage de ladite embase sont en sens contraire.

FIG. 2

FIG. 1

Office européen
des brevets

**RAPPORT DE RECHERCHE EUROPEENNE**

Numero de la demande

EP    91 81 0455

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-C-832 373 (RÖHM)<br>* page 2, ligne 62 - ligne 64; figure 1 *<br>--- | 1 | B23B31/11<br>B23B31/00 |
| A | US-A-1 889 571 (REDINGER)<br>* page 1, ligne 25 - ligne 34; figure 1 *<br>--- | 2 | |
| A | DE-A-2 138 566 (SIEMENS)<br>----- | | |

DOMAINES TECHNIQUES
RECHERCHES (Int. Cl.5 )

B23B

Le présent rapport a été établi pour toutes les revendications

| Lieu de la recherche | Date d'achèvement de la recherche | Examinateur |
|---|---|---|
| LA HAYE | 07 OCTOBRE 1991 | BOGAERT. F.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)